# EUROPEAN PATENT APPLICATION

(11) **EP 4 818 978 A1**
(43) Date of publication of application: **07.10.2026**
(21) Application number: 23960129.7
(22) Date of filing: 28.11.2023
(51) Int. Cl.: G06N 3/08

(54) **MACHINE LEARNING PROGRAM, MACHINE LEARNING DEVICE, AND MACHINE LEARNING METHOD**

(71) Applicant: FUJITSU LIMITED, Kawasaki-shi, Kanagawa 211-8588 (JP)
(72) Inventor: KINGETSU, Hiroaki, Kawasaki-shi, Kanagawa 211-8588 (JP)
(74) Representative: Hoffmann Eitle
(86) International application number: PCT/JP2023/042624
(87) International publication number: WO 2025/115108

(57) **Abstract**

A concept drift occurs during the operation of the AI system, and the accuracy of the machine learning model decreases. Therefore, there is a method of maintaining the accuracy by following the concept drift by training each layer of the machine learning model and slowly reducing the learning rate. However, in the related method, only the some determined layers are trained. Therefore, there are cases where the accuracy of the machine learning model fails to be maintained at a sufficient level. A machine learning program causes a computer to execute acquiring, in a case where inference by a trained neural network model is performed, a degree of contribution, of each of a plurality of neurons included in the neural network model, to a prediction, and retraining the neural network model without updating a weight of a neuron whose degree of contribution satisfies a predetermined criterion among the plurality of neurons based on the degree of contribution. As a result, degradation of the accuracy of the neural network model can be suppressed.

## Description

### [Technical Field]

The present invention relates to a machine learning technique.

### [Background Art]

After the introduction of an artificial intelligence (AI) system, the accuracy of the AI degrades with the lapse of time. For example, a problem that the quality of data to be classified by the machine learning model changes during operation, a so-called concept drift occurs, and the accuracy of the machine learning model decreases.

Therefore, in order to ensure the quality of the AI system, for example, measures such as monitoring the output result of the AI and detecting an abnormal value or predicting degradation of the accuracy and detecting it in advance are needed. Then, in a case where the accuracy of the machine learning model has degraded or there is a sign of degradation, or the like, training (retraining) of the machine learning model is performed to maintain the accuracy of the machine learning model.

A representative example of the machine learning model is a neural network model. In addition, when training a neural network model, there is a method of maintaining the accuracy of a machine learning model following a concept drift by performing training for each layer such as a fully connected layer (FC layer) and a batch normalization layer (BN layer) and slowly reducing the learning rate.

### [Citation List]

### [Patent Citation]

### Non Patent Document

Non Patent Document 1: Sergey Ioffe, Christian Szegedy, "Batch Normalization: Accelerating Deep Network Training by Reducing Internal Covariate Shift",arXiv:1502.03167v3

### [Summary of Invention]

### [Technical Problem]

However, in the related method, only the some determined layers are trained regardless of the prediction content of the machine learning model or the like. Therefore, there are cases where the accuracy of the machine learning model fails to be maintained at a sufficient level. On the other hand, in a case where all the layers are trained, for example, when the training data is small, overfitting or forgetting (catastrophic forgetting) may occur.

In an aspect, an object of the present invention is to suppress degradation of the accuracy of a neural network model.

### [Solution to Problem]

In one aspect, a machine learning program causes a computer to execute: acquiring, in a case where inference by a trained neural network model is performed, a degree of contribution, of each of a plurality of neurons included in the neural network model, to a prediction; and retraining the neural network without updating a weight of a neuron whose degree of contribution satisfies a predetermined criterion among the plurality of neurons based on the degree of contribution.

### [Advantageous Effects of Invention]

In an aspect, degradation of the accuracy of the neural network model can be suppressed.

### [Brief Description of Drawings]

FIG. 1 is a diagram illustrating an example of a concept drift.
FIG. 2 is a diagram illustrating an example of each of abnormal value detection and a degradation accuracy prediction.
FIG. 3 is a diagram illustrating an example of Multi-Step Entropy Minimization (MEM).
FIG. 4 is a diagram illustrating an example of a problem.
FIG. 5 is a diagram for describing an example of a problem with the MEM for training only a specific layer.
FIG. 6 is a diagram illustrating an example of tuning of a neuron weight according to the present embodiment.
FIG. 7 is a diagram illustrating a configuration example of a machine learning device 10 according to the present embodiment.
FIG. 8 is a flowchart illustrating an example of a flow of a training and a prediction process according to the present embodiment.
FIG. 9 is a diagram illustrating an example of an effect of tuning a neuron weight according to the present embodiment.
FIG. 10 is a diagram illustrating a hardware configuration example of the machine learning device 10 according to the present embodiment.

### [Embodiments for Carrying Out the Invention]

Hereinafter, embodiment examples of a machine learning program, a machine learning device, and a machine learning method according to the present embodiment will be described in detail with reference to the drawings. Note that the present embodiment is not limited to the embodiment examples. In addition, the embodiment examples can be appropriately combined within a range without inconsistency.

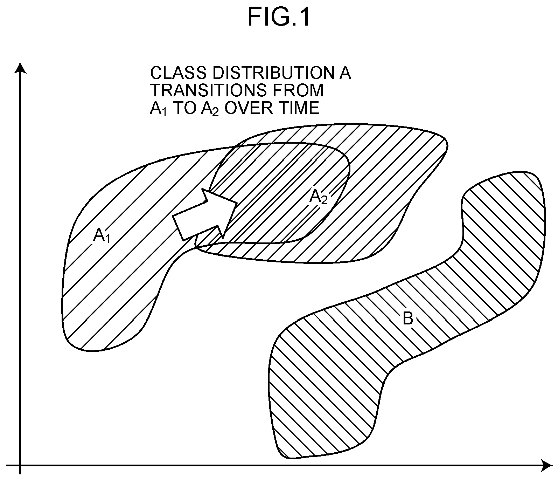

First, a concept drift will be described. FIG. 1 is a diagram illustrating an example of the concept drift. The example of FIG. 1 illustrates class distributions A and B, and illustrates that the class distribution A transitions from A₁ to A₂ over time. Such a change in data distribution over time is a concept drift. The concept drift can occur, for example, in mail spams, electricity demands, stock prices, poker hands (the way of playing a poker hand changes), images (the input changes due to changes in seasons and time of day), etc.

In the example of FIG. 1, in the original learning device which, is an information processing apparatus, since the machine learning model is trained with the data A₁ as correct data, the accuracy decreases with the lapse of time. In addition, since there is no correct data in the data A₂, a method of maintaining the accuracy by following a change in data distribution is needed.

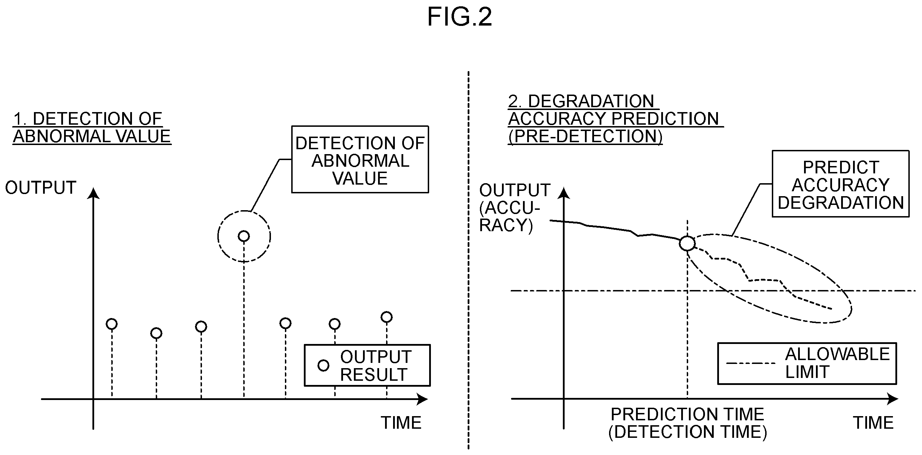

Next, problems with the prior art will be described. FIG. 2 is a diagram illustrating an example of each of abnormal value detection and a degradation accuracy prediction. In FIG. 2, an example of abnormal value detection for securing the quality of the AI system is illustrated on the left side, and an example of a degradation accuracy prediction is illustrated on the right side.

For example, as illustrated on the left side of FIG. 2, in the abnormal value detection for securing the quality of the AI system, the output result from the machine learning model is monitored, and an abnormal value that deviates from a predetermined threshold value range or the like is detected.

Furthermore, for example, as illustrated on the right side of FIG. 2, in the degradation accuracy prediction (prediction inference) for securing the quality of the AI system, the output result from the machine learning model is monitored, the accuracy at the future prediction time is predicted, and it is determined whether the prediction accuracy is within the allowable limit.

However, in the abnormal value detection and the degradation accuracy prediction, for example, it is difficult to identify a factor of the anomaly, and there is a problem that it is not possible to cope with a case where an input other than the input to the monitoring target causes the abnormal value or the degradation of the accuracy. In addition, there is a case where a change in input to the machine learning model causes the abnormal value or degradation of the accuracy, and there is a problem that this case cannot be handled.

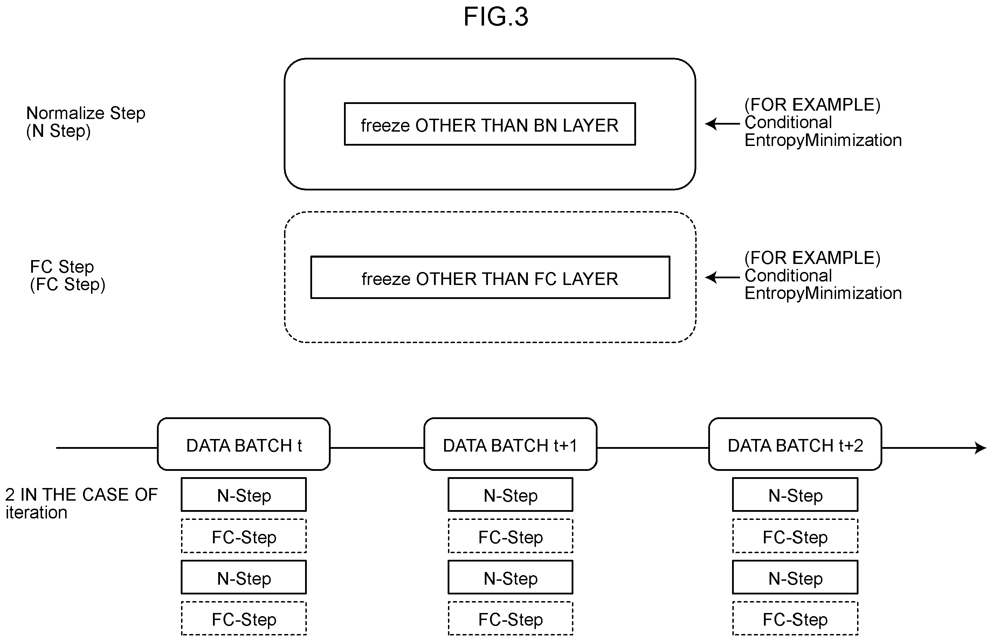

FIG. 3 is a diagram illustrating an example of Multi-Step Entropy Minimization (MEM). In the MEM, for example, as illustrated in the upper part of FIG. 3, only the BN layer is trained by freezing layers other than the BN layer in the N step, and only the FC layer is trained by freezing layers other than the FC layer in the FC Step. Then, in the MEM, for example, as illustrated in the lower part of FIG. 3, by alternately executing the N Step and the FC Step, the learning rate is slowly lowered to be weak, and follows the concept drift.

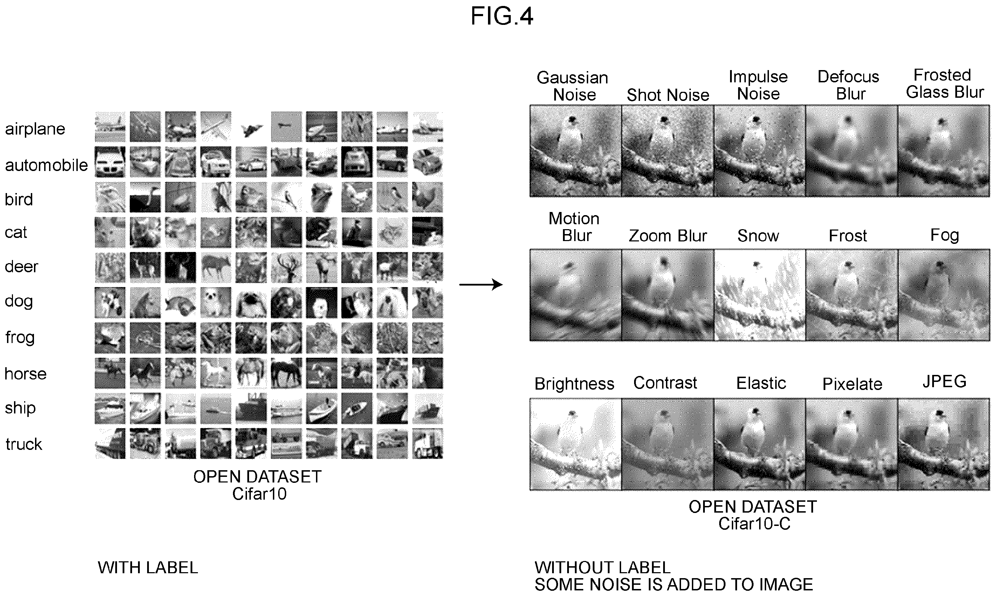

However, there is a problem even when the MEM is used. FIG. 4 is a diagram illustrating an example of a problem. The left side of FIG. 4 illustrates the training data, and the right side illustrates the operation data. For example, the operation data includes various noises and is degraded relative to the training data.

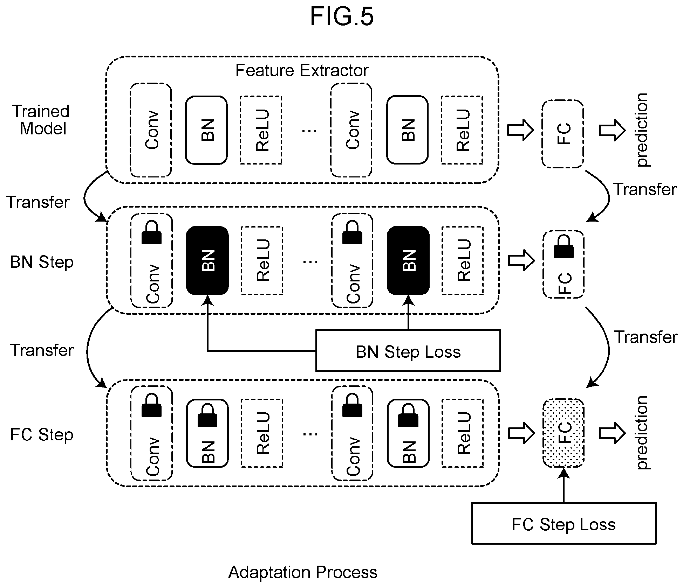

FIG. 5 is a diagram for describing an example of a problem with the MEM for training only a specific layer. First, for example, Loss of the operation data is calculated for the operation model. More specifically, for example, the output of the operation model is obtained using the stored operation data such as 200 images at certain regular intervals.

Then, as illustrated in FIG. 5, layers other than the specific layer are frozen, and only the specific layer is sequentially trained. More specifically, for example, the loss function is made a conditional entropy, and the weight is changed so as to minimize the conditional entropy. In addition, for example, statistical adjustment is performed only on the N Step BN layer to change the affine transformation parameters. In addition, for example, adjustment is performed on the classification boundary surface only in the FC layer with respect to the model that matches the FC Step and the N Step. In the normal semi-supervised method, these changes are applied to all the layers. In addition, prediction is performed based on an adapted result.

As described above, in the related method, only the some determined layers are trained regardless of the prediction content of the machine learning model or the like. Therefore, there are cases where the accuracy of the machine learning model fails to be maintained at a sufficient level. On the other hand, in a case where all the layers are trained, for example, when the training data is small, overfitting or forgetting (catastrophic forgetting) may occur. For example, about 1000 images per class are needed to correct all the layers, and when it is less than this, the accuracy of the machine learning model may degrade.

Therefore, in the present embodiment, only weights of neurons that are difficult to be used at the time of prediction by a trained neural network (NN) model, that is, that have a low degree of contribution to a prediction, are tuned.

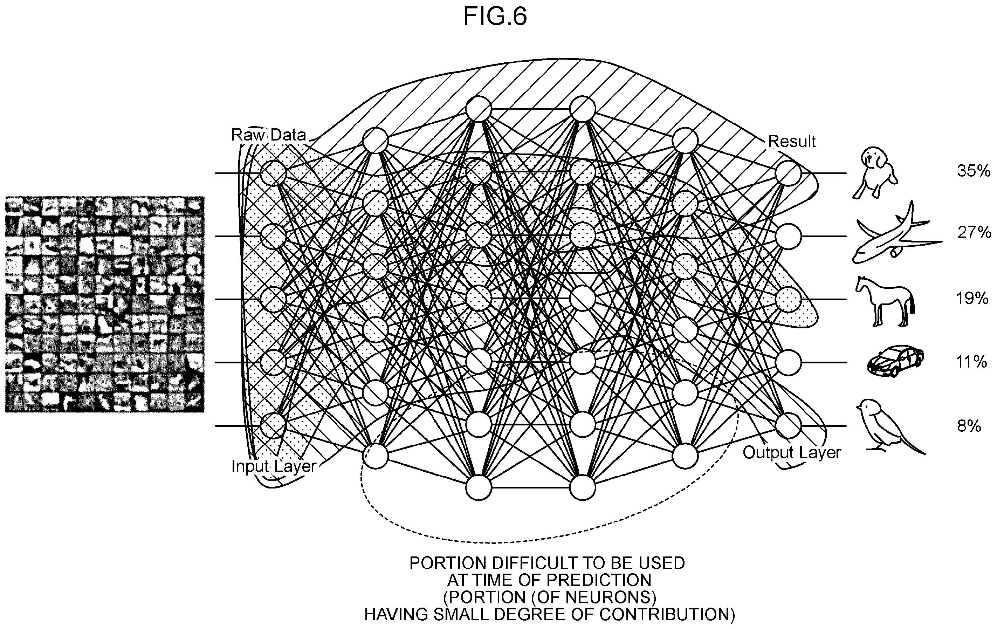

FIG. 6 is a diagram illustrating an example of tuning of neuron weights according to the present embodiment. In FIG. 6, a portion surrounded by a broken line indicates neurons having a low degree of contribution to a prediction, and in the present embodiment, for example, only the neurons of this portion are to be tuned. In the related method, only a specific layer is trained as described above, and the layer refers to a set of neurons disposed in the longitudinal direction in FIG. 6. In the present embodiment, the degree of contribution of each neuron to a prediction in a case where the entire NN is viewed is calculated instead of the layer unit as in the related method, and training is performed in the unit of the degree of contribution. A method of calculating the degree of contribution and the like will be described later. In this way, in the present embodiment, it is possible to suppress the degradation of the accuracy of the NN model while following the concept drift. Furthermore, in the present embodiment, since more neurons are changed than in the related method, it is possible to suppress degradation of the accuracy of the NN model with a smaller amount of data. Furthermore, in the present embodiment, since the neurons are not moved to such an extent that forgetting occurs and the weights of the neurons having a high degree of contribution to a prediction are left as they are without being corrected, it is possible to suppress forgetting due to overfitting.

### (Functional configuration of machine learning device 10)

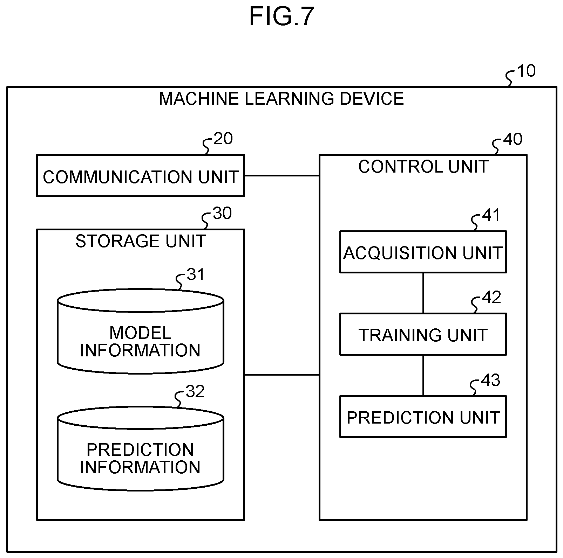

A functional configuration of a machine learning device 10, which is an execution subject of the present embodiment, will be described with reference to FIG. 7. FIG. 7 is a diagram illustrating a configuration example of the machine learning device 10 according to the present embodiment. The machine learning device 10 illustrated in FIG. 7 is, for example, an information processing apparatus such as a desktop personal computer (PC), a notebook PC, or a server computer. Note that, in FIG. 7, the machine learning device 10 is illustrated as one computer, but may be a distributed computing system including a plurality of computers. Furthermore, the machine learning device 10 may be a cloud computer device managed by a service provider providing a cloud computing service.

As illustrated in FIG. 7, the machine learning device 10 includes a communication unit 20, a storage unit 30, and a control unit 40.

The communication unit 20 is a processing unit that controls communication with other devices, and is, for example, a communication interface such as a network interface card or a Universal Serial Bus (USB) interface.

The storage unit 30 has a function of storing various pieces of data and a program executed by the control unit 40, and stores, for example, model information 31, prediction information 32, and the like.

The model information 31 stores, for example, information about a machine learning model for recognizing an object or the like included in an image from a feature amount of the image, model parameters and training data for constructing the machine learning model, and the like. Note that the machine learning model may be, for example, an NN model.

The prediction information 32 stores, for example, a prediction result by a machine learning model, which is a trained NN model or the like, a degree of contribution, of each neuron included in the NN model, to a prediction, and the like.

Note that the above information stored in the storage unit 30 is merely an example, and the storage unit 30 can store various pieces of information other than the above information. Furthermore, for example, in a case where only training of the machine learning model is performed in the machine learning device 10 and prediction is performed in another device, the machine learning device 10 need not store part of the above information such as a prediction result in the prediction information 32.

The control unit 40 is a processing unit that controls the entire machine learning device 10, and is, for example, a processor or the like. The control unit 40 includes an acquisition unit 41, a training unit 42, and a prediction unit 43. Note that each processing unit is an example of an electronic circuit included in the processor or an example of a process executed by the processor.

For example, the acquisition unit 41 acquires the degree of contribution, of each of the plurality of neurons included in the NN model, to a prediction in a case where the prediction is performed by the trained NN model.

A process of acquiring the degree of contribution may include, for example, a process of acquiring the degree of contribution based on a weight of each of a plurality of neurons. More specifically, for example, the acquisition unit 41 takes an absolute value of the weight of each neuron and acquires the absolute value as the degree of contribution. In this case, a neuron having a low degree of contribution, that is, a small absolute value of the weight is to be trained. Alternatively, for example, the acquisition unit 41 acquires, as the degree of contribution, a gradient change in a weight in a case where the weight is further corrected by error backpropagation using the training data (in a case of attempting to overfit). In this case, a neuron having a low degree of contribution, that is, a small gradient change in weight is to be trained. Alternatively, the acquisition unit 41 acquires, for example, a reciprocal of an absolute value error from an average of weights of a plurality of neurons as the degree of contribution. In this case, a neuron having a low degree of contribution, that is, a large absolute value error from the average of the weights is to be trained.

For example, the training unit 42 creates an operation model, which is an NN model or the like for predicting an object or the like included in an image from a feature amount of the image, by training using the operation model training data such as 20 images per classification target class.

Furthermore, for example, based on the degree of contribution acquired by the acquisition unit 41, the training unit 42 retrains the NN model without updating (by freezing the weight) the weight of the neuron whose degree of contribution satisfies a predetermined criterion among the plurality of neurons. The training unit 42 retrains the NN model without updating a weight of a neuron that satisfies a predetermined criterion, for example, a neuron whose degree of contribution is equal to or greater than a predetermined threshold value, among the plurality of neurons. In other words, only neurons having a degree of contribution less than the predetermined threshold value and having a low degree of contribution are retrained. Note that retraining the neurons may include, for example, correcting weights of the neurons by entropy minimization or the like.

More specifically, for example, the training unit 42 selects neurons having a low degree of contribution at a proportion from neurons having a low degree of contribution. Note that selecting neurons at a proportion from neurons having a low degree of contribution may be, for example, selecting neurons having a degree of contribution of the lowest 10%. Then, for example, the training unit 42 sets the selected neurons having a low degree of contribution as training targets, and retrains the NN model without updating a weight of a neuron having a degree of contribution equal to or greater than a predetermined threshold value.

Furthermore, a process of retraining the neurons may include, for example, a process of retraining the NN model using the training data without a correct answer label without updating the weight of the neuron equal to or more than the predetermined threshold value based on the degree of contribution.

The prediction unit 43 predicts an object or the like included in the image from the feature amount of the image, for example, using the NN model trained by the training unit 42. Note that, in a case where the machine learning device 10 only trains the machine learning model and prediction is performed by another device, or the like, the machine learning device 10 need not include the prediction unit 43.

### (Flow of processing)

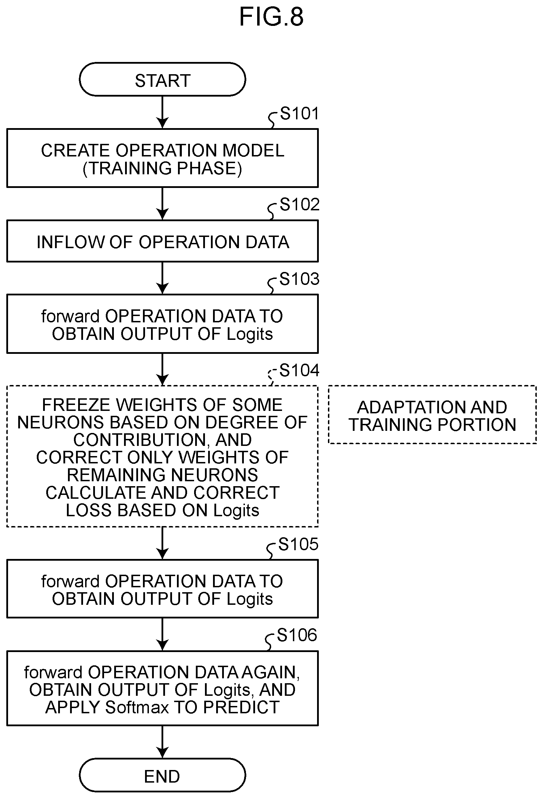

Next, a flow of a training and a prediction process by the machine learning device 10 will be described with reference to FIG. 8. FIG. 8 is a flowchart illustrating an example of a flow of the training and the prediction process according to the present embodiment.

First, the machine learning device 10 creates, for example, an operation model for predicting an object or the like included in an image from a feature amount of the image by training the operation model using training data such as 20 images per classification target class (step S101).

Next, the machine learning device 10 causes operation data such as 200 images to flow into the operation model generated in step S101, for example (step S102).

Next, for example, the machine learning device 10 forwards the operation data inflowing in step S102 to the operation model generated in step S101, and obtains an output of Logits, that is, a predicted value of the operation model (step S103).

Next, the machine learning device 10 freezes the weights of some neurons of the operation model by, for example, the degree of contribution, and corrects only the weights of the remaining neurons (step S104). Correcting the weights of the neurons in step S104 may include correcting the weights by calculating a loss based on Logits obtained in step S103, for example. Furthermore, the weights of the remaining neurons may be, for example, weights of neurons having a degree of contribution of the lowest 10%.

Next, for example, the machine learning device 10 forwards the operation data inflowing in step S102 to the operation model in which the weights have been corrected in step S104, and obtains an output of Logits (step S105).

Next, for example, the machine learning device 10 forwards the operation data inflowing in step S102 to the operation model in which the weights have been corrected in step S104, obtains an output of Logits, and applies Softmax to make a prediction (step S106). After the execution of step S106, the training and the prediction process illustrated in FIG. 8 ends.

### (Effects)

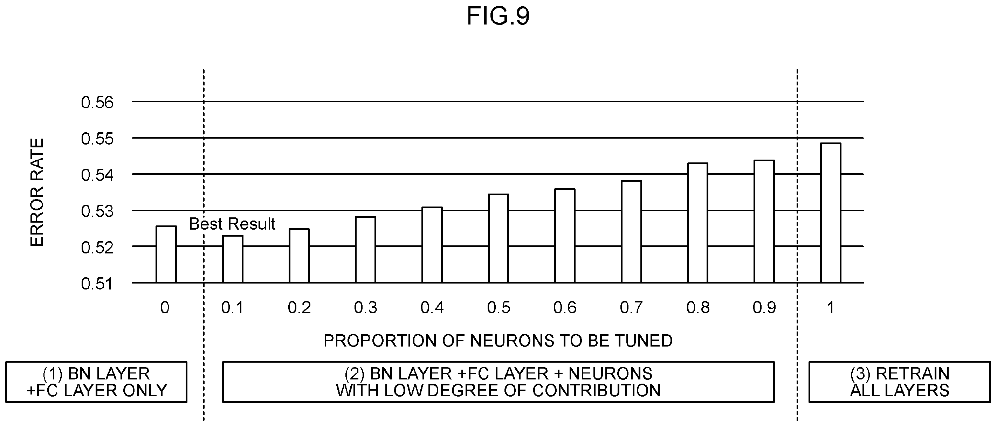

Next, an effect of tuning the neuron weight according to the present embodiment will be described as a reference. FIG. 9 is a diagram illustrating an example of the effect of tuning the neuron weight according to the present embodiment. FIG. 9 illustrates results of tuning the weights for each of (1) only the BN layer + the FC layer of the final layer, (2) the BN layer + the FC layer as the final layer + neurons with a low degree of contribution, and (3) all the layers, with respect to the open data Cifar100-C illustrated in FIG. 4. As illustrated in FIG. 9, the result is indicated by an error rate where degradation of the accuracy is suppressed as the error rate is lower and the result is better.

In addition, the tuning of only the BN layer + the FC layer as the final layer illustrated in (1) in FIG. 9 is, for example, tuning of the target layer by the related method described with reference to FIG. 5 and the like.

In addition, tuning of the BN layer + FC as the final layer+ neurons with a low degree of contribution illustrated in (2) in FIG. 9 is tuning in the present embodiment. For (2), in FIG. 9, the portion in which the proportion of neurons to be tuned is 0.1 is the result of the tuning of the BN layer + FC as the final layer + the neurons having a degree of contribution of the lowest 10% (as the neurons having the low degree of contribution). In the tuning result in FIG. 9, in a case where the proportion of the neurons to be tuned is 0.1, that is, in a case where the weights of the neurons having the degree of contribution of the lowest 10% are corrected, the degradation of the accuracy can be suppressed the most, which is a good result.

Furthermore, as described above, the machine learning device 10 acquires the degree of contribution, of each of the plurality of neurons included in the neural network model, to a prediction in a case where the inference by the trained neural network model is performed, and retrains the neural network model without updating the weight of the neuron whose degree of contribution satisfies the predetermined criterion among the plurality of neurons based on the degree of contribution.

As described above, the machine learning device 10 can suppress the degradation of the accuracy of the neural network model by freezing the weight of the neuron having a high degree of contribution to the prediction and training the weight of the neuron having the low degree of contribution.

Furthermore, a process of retraining the neurons, the retraining process being executed by the machine learning device 10, includes a process of retraining the neural network model using training data without a correct answer label without updating the weight of neurons equal to or more than a predetermined threshold value based on the degree of contribution.

As a result, the machine learning device 10 can suppress degradation of the accuracy of the neural network model without a correct answer label.

Furthermore, a process of acquiring the degree of contribution, the acquiring process being executed by the machine learning device 10, includes a process of acquiring the degree of contribution based on the weight of each of the plurality of neurons.

As a result, the machine learning device 10 can suppress degradation of the accuracy of the neural network model.

Furthermore, in a process of acquiring the degree of contribution, the acquiring process being executed by the machine learning device 10, for example, the absolute value of the weight of each of the plurality of neurons can be used as the degree of contribution. Furthermore, in another example, as the degree of contribution, a gradient change in a weight in a case of attempting to overfit the neural network model, a reciprocal of an absolute value error from an average of weights of a plurality of neurons, and the like can be used. Alternatively, the degree of contribution may be a numerical value obtained by combining the above-described numerical values.

As a result, the machine learning device 10 can suppress degradation of the accuracy of the neural network model.

Furthermore, a process of retraining the neurons, the retraining process being executed by the machine learning device 10, includes a process of selecting, as neurons having a low degree of contribution, a predetermined proportion of neurons out of the total number of the plurality of neurons from neurons having a low degree of contribution among the plurality of neurons, and retraining the neural network model without updating a weight of a neuron equal to or more than a predetermined threshold value with the selected neurons having a low degree of contribution as training targets.

As a result, the machine learning device 10 can further suppress degradation of the accuracy of the neural network model.

### (System)

The processing procedure, the control procedure, the specific name, and the information including various pieces of data and parameters illustrated in the document or in the drawings may be changed in any manner unless otherwise specified. Furthermore, the specific examples, distributions, numerical values, and the like described in the embodiment examples are merely examples, and may be changed in any manner.

In addition, specific forms of distribution and integration of the components of the machine learning device 10 are not limited to those illustrated in the drawings. For example, the training unit 42 of the machine learning device 10 may be distributed to a plurality of processing units, or the acquisition unit 41 and the training unit 42 of the machine learning device 10 may be integrated into one processing unit. That is, all or some of the components may be functionally or physically distributed/integrated in any suitable units according to various loads, usage conditions, and the like. Furthermore, all or any part of each processing function of each device can be realized by a central processing unit (CPU) and a program analyzed and executed by the CPU, or can be realized as hardware by wired logic.

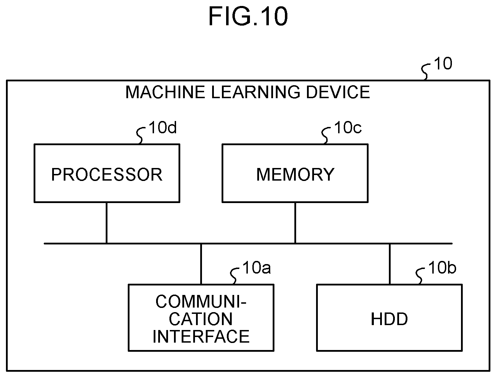

FIG. 10 is a diagram illustrating a hardware configuration example of the machine learning device 10 according to the present embodiment. As illustrated in FIG. 10, the machine learning device 10 includes a communication interface 10a, a hard disk drive (HDD) 10b, a memory 10c, and a processor 10d. The units illustrated in FIG. 10 are connected to each other by a bus or the like.

The communication interface 10a is a network interface card or the like, and communicates with another information processing apparatus. The HDD 10b stores, for example, programs and data for operating the functions illustrated in FIG. 7 and the like.

The processor 10d is a CPU, a micro processing unit (MPU), a graphics processing unit (GPU), or the like. Furthermore, the processor 10d may be realized by an integrated circuit such as an application specific integrated circuit (ASIC) or a field programmable gate array (FPGA). For example, the processor 10d reads a program for executing a process similar to that of each processing unit illustrated in FIG. 7 or the like from the HDD 10b or the like and develops the program in the memory 10c. As a result, the processor 10d can operate as a hardware circuit that executes a process of realizing each function described in FIG. 7 and the like.

In addition, the machine learning device 10 can implement functions similar to those of the above-described embodiment example by reading the program from the recording medium using the medium reading device and executing the read program. Note that the program referred to in another embodiment example is not limited to being executed by the machine learning device 10. For example, the above-described embodiment example may be similarly applied to a case where an information processing apparatus other than the machine learning device 10 executes a program or a case where the machine learning device 10 and another information processing apparatus execute a program in cooperation with each other.

The program may be distributed via a network such as the Internet. In addition, the program may be recorded in a computer-readable storage medium such as a hard disk, a flexible disk (FD), a CD-ROM, a magneto-optical disk (MO), or a digital versatile disc (DVD). Then, the program may be executed by being read from the recording medium by the machine learning device 10 or the like.

### [Explanation of Reference]

- 10: MACHINE LEARNING DEVICE
- 10a: COMMUNICATION INTERFACE
- 10b: HDD
- 10c: MEMORY
- 10d: PROCESSOR
- 20: COMMUNICATION UNIT
- 30: STORAGE UNIT
- 31: MODEL INFORMATION
- 32: PREDICTION INFORMATION
- 40: CONTROL UNIT
- 41: ACQUISITION UNIT
- 42: TRAINING UNIT
- 43: PREDICTION UNIT

## Claims

1. A machine learning program that causes a computer to execute:
acquiring, in a case where inference by a trained neural network model is performed, a degree of contribution, of each of a plurality of neurons included in the neural network model, to a prediction; and
retraining the neural network model without updating a weight of a neuron whose degree of contribution satisfies a predetermined criterion among the plurality of neurons based on the degree of contribution.

2. The machine learning program according to claim 1, wherein
the retraining includes
retraining the neural network model using training data without a correct answer label without updating a weight of a neuron equal to or more than a predetermined threshold value based on the degree of contribution.

3. The machine learning program according to claim 1, wherein
the acquiring the degree of contribution includes
acquiring the degree of contribution based on a weight of each of the plurality of neurons.

4. The machine learning program according to claim 3, wherein
the acquiring the degree of contribution includes
acquiring, as the degree of contribution, an absolute value of a weight of each of the plurality of neurons, a gradient change in a weight in a case of attempting to overfit the neural network model, or a reciprocal of an absolute value error from an average of weights of the plurality of neurons, or any combination thereof.

5. The machine learning program according to claim 3 or 4, wherein
the retraining includes
selecting, as neurons having a low degree of contribution, a predetermined proportion of neurons out of a total number of the plurality of neurons from neurons having a low degree of contribution among the plurality of neurons, and
retraining the neural network model without updating a weight of a neuron equal to or more than a predetermined threshold value with the selected neurons having a low degree of contribution as training targets.

6. A machine learning device comprising a control unit configured to execute:
a process of acquiring, in a case where inference by a trained neural network model is performed, a degree of contribution, of each of a plurality of neurons included in the neural network model, to a prediction; and
a process of retraining the neural network model without updating a weight of a neuron whose degree of contribution satisfies a predetermined criterion among the plurality of neurons based on the degree of contribution.

7. A machine learning method executed by a computer, comprising:
a process of acquiring, in a case where inference by a trained neural network model is performed, a degree of contribution, of each of a plurality of neurons included in the neural network model, to a prediction; and
a process of retraining the neural network model without updating a weight of a neuron whose degree of contribution satisfies a predetermined criterion among the plurality of neurons based on the degree of contribution.
